(19) Europäisches Patentamt
European Patent Office
Office européen des brevets

(11) **EP 3 581 729 A1**

(12) **EUROPEAN PATENT APPLICATION**

(43) Date of publication:
**18.12.2019 Bulletin 2019/51**

(51) Int Cl.:
*E04D 3/35* (2006.01)         *E04D 13/12* (2006.01)
*B32B 27/06* (2006.01)         *B32B 5/32* (2006.01)
*E04C 2/20* (2006.01)         *E04C 2/24* (2006.01)
*E04D 13/16* (2006.01)

(21) Application number: **19179584.8**

(22) Date of filing: **12.06.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.06.2018 NL 2021134**

(71) Applicant: **IsoBouw Systems B.V.
5711 EG Someren (NL)**

(72) Inventors:
• **RENSEN, Petrus Frederikus Maria
5711 EG Someren (NL)**
• **SMITS, Hugo Alexander
5711 EG Someren (NL)**
• **KNIPPERS, Franciscus Gerardus Maria
5711 EG Someren (NL)**
• **VAN DER BURGT, Petrus Henricus Johannes
5711 EG Someren (NL)**

(74) Representative: **Algemeen Octrooi- en
Merkenbureau B.V.
P.O. Box 645
5600 AP Eindhoven (NL)**

(54) **INSULATION PANEL AND METHOD FOR INSULATING A STRUCTURE OF A FLAT ROOF OF A BUILDING**

(57) The invention provides an insulation panel for insulating a structure of a flat roof of a building. The insulation panel comprises a first layer and a second layer. The first layer is of expanded polystyrene with a thermal conductivity greater than 0.032 W/m·K and the second layer is of expanded polystyrene with a thermal conductivity less than or equal to 0.032 W/m·K. The thickness of the first layer is at least 10 mm and less than the thickness of the second layer. The compressive strength of the material of the first layer is at least 10 kPa greater than that of the material of the second layer, and is greater than or equal to 60 kPa. The invention further provides a method for insulating a structure of a flat roof, wherein use is made of insulation panels as mentioned above.

Fig 2

**Description**

The present invention relates to an insulation panel for the thermal insulating of a structure of a flat roof of a building. It is known to configure an insulating covering of a flat roof as insulation panels of expanded polystyrene (EPS) positioned against each other. Various requirements are specified for such an insulating covering (or insulating layer) and therefore for the individual insulation panels that are combined to form the insulating covering. The insulating covering must possess a certain thermal insulation value. This insulation value is called the Rc value and is expressed in $m^2K/W$ and is directly proportional to the thickness d of the layer of material expressed in metres and inversely proportional to the thermal conductivity A of the material expressed in W/m·K. Furthermore, requirements are also specified for an insulating covering regarding the walkability, i.e. compressive strength or compression strength. This requirement is generally expressed in kPa and is determined according to European standard EN-826. Broadly speaking, as the density of the EPS material of the insulating covering, generally expressed in $kg/m^3$, increases, the compressive strength also increases.

It is generally known to employ EPS of the so-called white type as the material for insulation panels for application on flat roofs. Furthermore, it is also known, although still to a limited extent, to employ insulation panels of EPS of the so-called grey type on structures for flat roofs. One or more constituents affecting heat conduction, such as carbon for example as graphite or soot and/or such as aluminium oxide, are added to this grey EPS. The percentage by weight of such constituents is generally between 2% and 12%. The thermal insulating properties of grey EPS are better than those of white EPS. Thus, grey EPS typically has a thermal conductivity of 0.031 W/m·K or 0.032 W/m·K or at least lower than 0.033 W/m·K. White EPS typically has a thermal conductivity that is greater than or equal to 0.033 W/m·K. In contrast to white EPS, the thermal conductivity of grey EPS is not or is barely dependent on the density of the EPS. On the other hand, at identical density, white EPS has a higher compressive strength than grey EPS.

Furthermore, it is known to apply insulation panels on facades. The document CH 706454 A2 describes such an insulation panel that is built up from two or three layers, namely a thick main layer of grey EPS and one or two thin EPS covering layers that are lighter in colour. In that document it is suggested to apply the panels in question on roofs as well. Probably this is aimed at sloping roofs, since the panels in question are absolutely unsuitable for walking on, and consequently are unsuitable for use on flat roofs. This unsuitability is also clear from the suggestion in the document to make the covering layers elastic. The covering layers serve for screening the main layer, in particular against the effects of the sun, said screening being based on reflection by the covering layers. Furthermore, the covering layers should be suitable for adhesion, for example of a plastered layer, thereon.

The invention aims to provide an insulation panel for application on flat roofs, with which requirements regarding thermal insulation and walkability, i.e. compressive strength, can be satisfied more efficiently. For this purpose, the insulation panel according to the invention comprises a first layer of a first material and, bonded to the first layer, a second layer of a second material, wherein the first material is expanded polystyrene with a thermal conductivity greater than 0.032 W/m·K and wherein the second material is expanded polystyrene with a thermal conductivity less than or equal to 0.032 W/m·K, wherein the thickness of the first layer is at least 10 mm and is less than the thickness of the second layer, and wherein the compressive strength of the first material is at least 10 kPa greater than the compressive strength of the second material and is greater than or equal to 60 kPa. The bond between the first layer and the second layer is preferably a direct bond, wherein the insulation panel is formed as an integral component in a mould. It is conceivable in the context of the present invention that the thicknesses of the first layer and the second layer are constant over the entire area of the layers. On the other hand it is also possible that the first layer and/or the second layer are inclined, for example for the purpose of creating a slope on a flat roof. In that case the thickness of the layer in question should be interpreted as the average thickness of that layer. It is also possible that the first layer or the second layer does not have a constant thickness on account of local regions where the thickness is smaller locally, for example for rebates on the perimeter of the insulation panel. These regions should be ignored when determining the thickness of the layer in question. The minimum thickness of the insulation panel is typically 150 mm.

The invention provides better possibilities for varying the properties regarding compressive strength and thermal insulation of the insulation panel in order to obtain an insulating covering that satisfies the specified requirements regarding compressive strength and insulation value with efficient use of materials. Even relatively small savings of materials may result in considerable cost savings with large volumes in the absolute sense. Furthermore, the application of a minimum thickness of the first layer of 10 mm and a minimum compressive strength of the first material of 60 kPa guarantees that the usual walkability requirements can be satisfied. By choosing higher compressive strength of the first material than of the second material, whereas the thermal conductivity of the first material is greater than the thermal conductivity of the second material, it is possible to make efficient use of the specific properties of the first material and of the second material.

The first material is typically EPS of the white type whereas the second material is typically EPS of the grey type.

The insulation panel according to the invention may be particularly efficient if the compressive strength of the first material is at least 70 kPa and/or if the compressive strength of the first material is at least 20 kPa greater than the compressive strength of the second material.

As the thickness of the first layer decreases, it is broadly speaking advantageous to choose a higher compressive strength of the material of the first layer. In this connection it may be advantageous if the thickness of the first layer is less than 15 mm and the compressive strength of the first material is at least 200 kPa and/or if the thickness of the first layer is less than 20 mm and the compressive strength of the first material is at least 150 kPa and/or if the thickness of the first layer is less than 25 mm and the compressive strength of the first material is at least 120 kPa and/or if the thickness of the first layer is less than 30 mm and the compressive strength of the first material is at least 100 kPa.

A substantial effect regarding the efficiency with which the material of the insulation panel is utilized may be achieved if the thickness of the second layer is at least two times, more preferably at least four times, as great as the thickness of the first layer and/or if the compressive strength of the first material is at least 1.2 times as great as the compressive strength of the second material.

In a particular embodiment, in the material of the insulation panel at least one coupling body is provided with a coupling surface, said coupling surface extending parallel to the first layer and/or the second layer. The coupling body is for example made of metal so that the coupling surface thereof can easily be gripped by a pin-shaped fastening device, such as a nail or a screw, with which the insulation panel is fastened to a structure of a flat roof when in use. During foaming of the insulation panel in a mould, the coupling body may be positioned within the mould so that after foaming, and thus after the insulation panel has acquired its shape, the coupling body is incorporated in the insulation panel.

In one embodiment, the insulation panel comprises a number of coupling bodies, wherein preferably each of at least some of the coupling bodies, at least in a perpendicular view on the coupling surfaces thereof, fits within a circle with a diameter of 20 cm. Within the last-mentioned dimension, it will in practice be possible, with high reliability, for the coupling bodies, which are hidden from view, to be "found" by the person who fastens the insulation panel by means of the aforementioned coupling body to the structure of the flat roof by inserting a pin-shaped fastening device, typically a screw, through these coupling bodies. A larger coupling body would lead to the disadvantage of consuming more raw material for the coupling body, and making the insulation panel heavier.

It is also possible for the at least one coupling body to have an oblong shape with a length of at least 50 cm. With such dimensions, one and same coupling body may be used effectively for allowing coupling of a number of pin-shaped fastening devices.

From the viewpoint of endeavouring to provide reliable fastening of the insulation panel to the building with as few pin-shaped fastening devices as possible, the insulation panel comprises a number of coupling bodies, which are provided in a regular pattern.

The invention further relates to a method for insulating a structure of a flat roof of a building comprising the steps of

a covering the structure of the flat roof with an insulating covering of insulation panels according to the invention positioned against one other as explained above, wherein the first layer extends above the second layer,

b after step a, covering the insulating covering with a strip-shaped or cloth-shaped covering layer,

c fastening the covering layer and the insulating covering to the structure of the flat roof.

A typical application of this method is where the structure of the flat roof comprises a closed roof layer, for example of concrete, steel or wood, in which the insulating covering is applied during step a.

In a particular, favourable embodiment, the method further comprises the steps of

d after step a, fastening the insulating covering to the structure of the flat roof by moving pin-shaped fastening devices whose length is greater than the thickness of the insulating covering from the top of the insulating covering and through the insulating covering, so that the upper ends of the pin-shaped fastening devices extend above the top of the insulating covering and the lower ends of the pin-shaped fastening devices extend with a clamping action into the structure of the flat roof,

e after step b, fastening the covering layer to the insulating covering by moving further pin-shaped fastening devices whose length is shorter than the thickness of the insulating covering from the top of the covering layer through the covering layer into the insulating covering, so that the upper ends of the further pin-shaped fastening devices extend above the covering layer and the lower ends of the further pin-shaped fastening devices extend into the insulating covering.

It is known, for fastening insulation panels to a building, to use exclusively pin-shaped fastening devices that are provided with an external thread and have a length that is greater than the thickness of the insulation panel, thus as mentioned in step d. These fastening devices are screwed through the covering layer from above and then extend with their lower ends into the structure of the flat roof. The fastening devices in question also have the function of securing the covering layer, such as typically a layer of plastic (PVC) or rubber (EPDM) or bitumen, on the insulating covering. The fastening devices in question are relatively expensive, and form a cold bridge in use. If on account of weather conditions such as a storm a partial vacuum is created above the covering layer, there is a risk of the covering layer coming loose from the insulating covering. The present preferred embodiment is based on the realization that the number of pin-shaped fastening devices required that are applied such as according to the prior art, may be limited by still applying the relatively long pin-shaped fastening devices before step b and by applying, after step b, relatively short pin-shaped fastening devices that extend through the covering layer and into the insulating covering but not into the structure of the flat roof. The total costs for the relatively long pin-shaped fastening devices thus to be applied during step d and the relatively short pin-shaped fastening devices thus to be applied during step e may consequently be lower than the total costs for the relatively long fastening devices such as are applied in the method according to the prior art. Furthermore, the relatively short pin-shaped fastening devices do not form a cold bridge, which is beneficial for the insulation of the roof, so that a thinner insulating covering can be used.

Besides for insulation panels according to the invention, the present embodiment of the method according to the invention may also be applied with insulation panels according to the prior art. Then it is thus a question of a method for insulating a structure of a flat roof of a building comprising the steps of

> a covering the structure of the flat roof with an insulating covering of insulation panels positioned against each other,
> b after step a, covering the insulating covering with a strip-shaped or cloth-shaped covering layer,
> c fastening the covering layer and the insulating covering to the structure of the flat roof,
> d after steps a, fastening the insulating covering to the structure of the flat roof by moving pin-shaped fastening devices whose length is greater than the thickness of the insulating covering from the top of the insulating covering through the insulating covering so that the upper ends of the pin-shaped fastening devices extend above the insulating covering and the lower ends of the pin-shaped fastening devices extend with a clamping action into the structure of the flat roof,
> e after step b, fastening the covering layer to the insulating covering by moving further pin-shaped fastening devices whose length is shorter than the thickness of the insulating covering from the top of the covering layer through the covering layer into the insulating covering so that the upper ends of the further pin-shaped fastening devices extend above the covering layer and the lower ends of the further pin-shaped fastening devices extend into the insulating covering.

If step d is carried out prior to step b, the covering layer can be applied over the (heads of) the pin-shaped fastening devices and any markings on or in the insulation panels are still visible for accurately applying the pin-shaped fastening devices, which may be particularly advantageous if coupling bodies are used, as explained above and hereunder.

When using insulation panels that are provided with one or a number of coupling bodies as explained above, even if these insulation panels are made entirely of one type of EPS, the gripping force of the further pin-shaped fastening devices or the fastening devices can be increased if respectively the further pin-shaped fastening devices are moved during step e through the coupling bodies and grip them after step e, and/or the pin-shaped fastening devices are moved during step d through the coupling bodies and grip them after step d.

The reliability with which a (further) fastening device actually engages with a coupling body that is hidden from view may be increased if the positions of the coupling bodies are found by means of a sensor, in order to carry out steps d and/or e in the correct position. For example, it may be a metal detector if the coupling bodies are made of metal.

The invention is explained in more detail hereunder on the basis of the description of possible embodiments of insulation panels and methods according to the invention, referring to the following figures:

> Fig. 1 shows a vertical section through a part of an insulation panel according to the invention;
> Fig. 2 shows, in vertical section II-II according to Fig. 3, a further embodiment of an insulation panel according to the invention in applied form;
> Fig. 3 shows a transparent top view of the insulation panel according to Fig. 2;
> Fig. 4 shows detail IV in Fig. 2;
> Fig. 5 shows detail V in Fig. 2;
> Fig. 6 shows a see-through top view of an insulation panel according to the invention;
> Fig. 7 shows a stepped section VII-VII according to Fig. 6;
> Fig. 8 shows detail VIII in Fig. 7;
> Fig. 9 shows detail IX in Fig. 7.

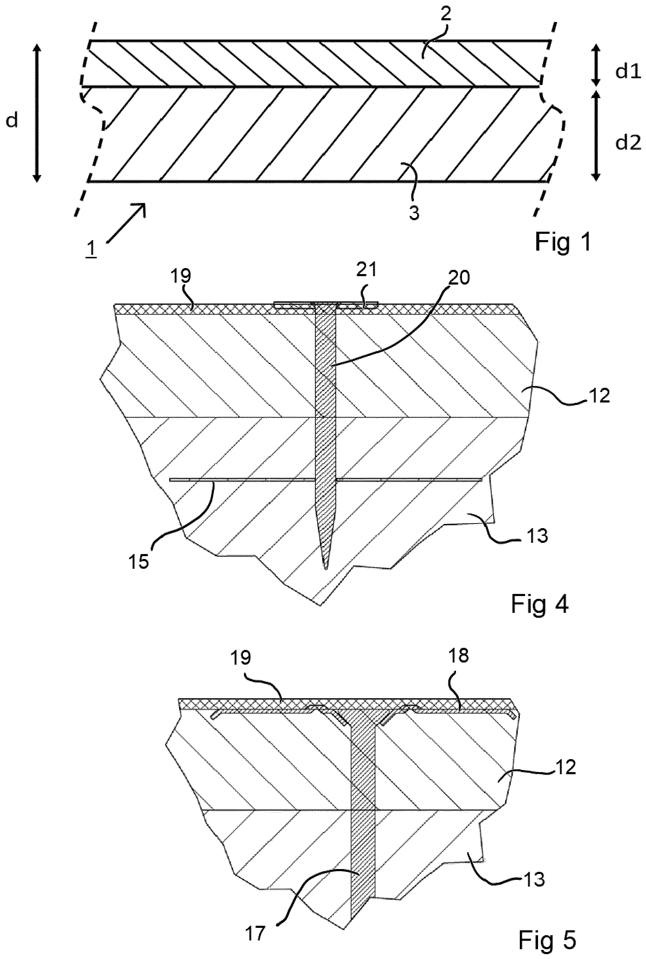

Insulation panel 1 according to Fig. 1 consists of two layers that are bonded together at their interface. The upper layer 2 is of so-called white EPS and has a thickness d1 of 40 mm. The lower layer 3 is of so-called grey EPS and has a thickness d2 of 149 mm. The thickness d of the insulation panel 1 is therefore 40 mm + 149 mm = 189 mm. The length and width of insulation panel 1 is 1.2 metres and 1.0 metre. Insulation panel 1 may for example be made by filling a mould with a mould cavity corresponding to the volume of the lower layer 3 with EPS granules of grey grade and foaming by steam treatment until the EPS fills the entire mould cavity. Then the mould cavity can be enlarged by moving a wall of the mould so that the size of the mould cavity increases with the volume of the upper layer 2. This extra mould cavity may then be filled again with EPS granules of the white type, which are also foamed by steam treatment and moreover adhere to the already foamed grey EPS of the upper layer 2.

In this example, the thermal conductivities of the white EPS and grey EPS are 0.034 W/m·K (= λ1) and 0.031 W/m·K (= λ2) respectively and the densities are 23 kg/m³ and 16 kg/m³ respectively, and the associated compressive strength is 150 kPa and 80 kPa respectively.

The aforementioned values give the result that the R value of the insulation panel comes to 6.0, as shown below:

$$R = \frac{d}{\lambda} = \frac{d1}{\lambda 1} + \frac{d2}{\lambda 2}$$

$$R = \frac{0{,}04}{0{,}034} + \frac{0{,}149}{0{,}031}$$

$$R = 5{,}982 \approx 6{,}0$$

The aforementioned values further result in a weight per m² of insulation panel 1 of 3.304 kg/m².

If we compare insulation panel 1 with an insulation panel that is made entirely of white EPS with an R value of 6.0 and that has a comparable (or even lower) walkability than that of insulation panel 1, then this can be achieved if the EPS has a density of 17.0 kg/m³ and accordingly a thermal conductivity with a value of 0.036 W/m·K and a compressive strength of 100 kPa and if the (total) thickness of the insulation panel in question is 216 mm. The weight per m² of the insulation panel made of white EPS then comes to 3.672 kg/m². Such an insulation panel made entirely of white EPS is thus both significantly thicker and significantly heavier than insulation panel 1. With an increase in thickness, it will be necessary to use longer, and thus more expensive, screws to fasten the insulation panels, through which the screws must pass completely, to a structure of a flat roof. An increase in weight leads in addition to an increase in the consumption of raw materials.

If we compare insulation panel 1 with an insulation panel that is made entirely of grey EPS with an R value of 6.0 and that has a comparable (or even lower) walkability than that of insulation panel 1, then this can be achieved if the EPS has a density of 18.5 kg/m³ and an associated compressive strength of 100 kPa, if the thermal conductivity has a value of 0.031 W/m·K and if the (total) thickness of the insulation panel in question is 186 mm. The weight per m² of the insulation panel made of white EPS then comes to 3.441 kg/m². Such an insulation panel made entirely of grey EPS is thus only 3 mm thinner but is heavier than insulation panel 1. Furthermore, grey EPS is more expensive than white EPS, typically between 10% and 20% more expensive, so that the cost price for the material of insulation panel 1 is or at least can be significantly lower than the cost price for the material of an insulation panel that is made entirely of grey EPS.

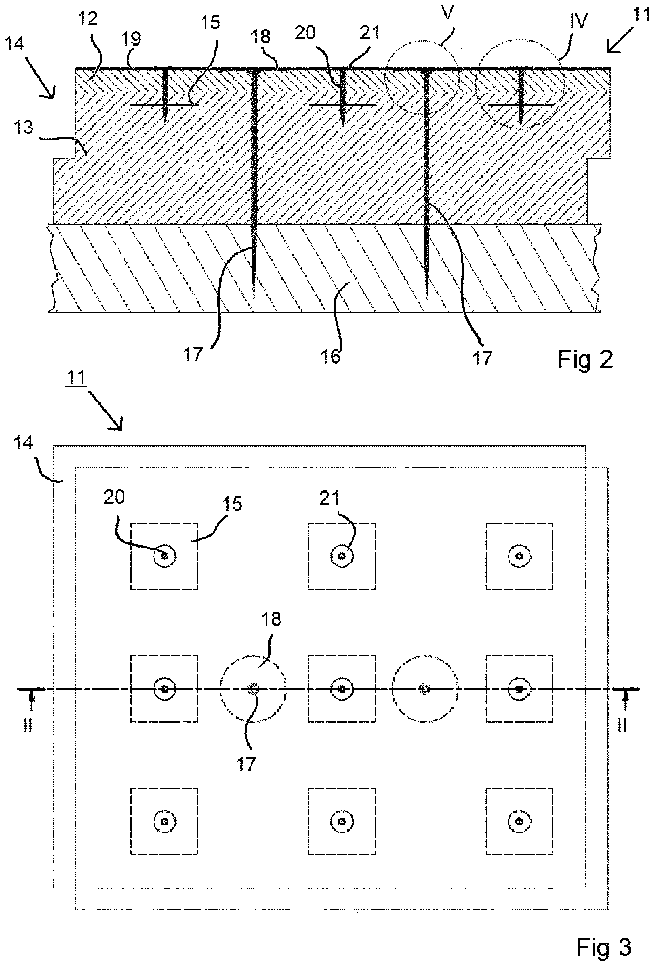

Figs. 2 and 3 show, not to scale, an insulation panel 11 with a first layer 12 of white EPS and a second layer 13 of grey EPS. Along the perimeter of the insulation panel 11, a rebate 14 is provided, so that insulation panels 11 can be pushed together without any question of a rectilinear seam between them, in a view as in Fig. 2, which extends over the full thickness of insulation panel 11. The insulation panel 11 is provided, in a regular pattern, with square steel (sheet metal) coupling plates 15. The sides of these coupling plates 15 have a length of 10 cm, while the thickness of the coupling plates 15 is 1.2 mm. The coupling plates 15 extend within the second layer 13 both parallel to the first layer 12 and to the second layer 13.

In applied form, the insulation panels 11, only one of which is shown in Figs. 2 and 3, are pushed against each other to form a closed insulating covering, and they cover a structure of a flat roof, a concrete roof layer 16 being shown in Fig.

2. Following application of the insulating covering, the insulation panels 11 are connected to the structure of the flat roof, more specifically to the concrete roof layer 16 thereof, by screwing screws with a length that is greater than the thickness of the insulation panels 11, called hereinafter long screws 17, from above via disk-shaped washers 18, through the insulation panels 11, until the heads of the long screws 17 press against the washers 18 and the lower ends of the long screws 17 fit tightly in the concrete roof layer 16.

Then a cloth-shaped or strip-shaped covering layer 19, for example of bitumen, PVC or EPDM, is fitted over the insulating covering. This covering layer 19 is then connected again to the insulating covering, more specifically to the insulation panels 11 thereof. By screwing screws with a length that is shorter than the thickness of the insulation panels 11, called short screws 20 hereinafter, from above via plain washers 21 into the insulation panels, in the positions where the coupling plates 15 are provided. In the process, the short screws 20 tap a hole in the coupling plates 15 so that the short screws 20 engage with the coupling plates 15. The lower ends of the short screws 20 extend under the coupling plates 15 into the second layer 13. A sensor, such as a metal detector or tracer, may be used for locating the coupling plates. Alternatively, perceptible markings, such as small dents, could also be provided on the upper sides of the insulation panels 11, at the location of the coupling plates 15.

Alternatively, the long screws 17, just like the short screws 20, could also be screwed through the coupling plates 15 or through other coupling plates specially provided for the purpose, into an insulation panel 11, to achieve stronger fastening between the insulation panels and the structure of the flat roof, so that optionally the number of long screws 17 required decreases. After screwing the short screws 20, a second layer, for example of bitumen or plastic, may be fitted over the covering layer 19, which is attached for example by gluing or fusing to the covering layer 19 and which, besides the covering layer 19, also masks the heads of screws 20 as well as the plain washers 21. If the covering layer 19 is made up of strips, the short screws 20 and/or the long screws 17 could also be applied in the region of the overlap between the strips, the heads of said screws 17 and/or 20 being located between the strips. It is also possible that for example at the edge of the roof in question, where the wind load is higher or at least where the risk of the covering layer 19 coming loose is greater, a number of extra long screws 17 and/or short screws 20 could be applied and/or that all long screws 17, after the covering layer 19 is applied, are screwed through the covering layer 19 into the insulation panels 11. The long screws 17 in question then of course also contribute to the connection of the covering layer 19 to the insulation panels 11. This may reduce the number of short screws 20 required. Moreover, it is possible, depending on the type of covering layer 19, for a further covering layer to be applied over the covering layer 19, as is known per se by a person skilled in the art.

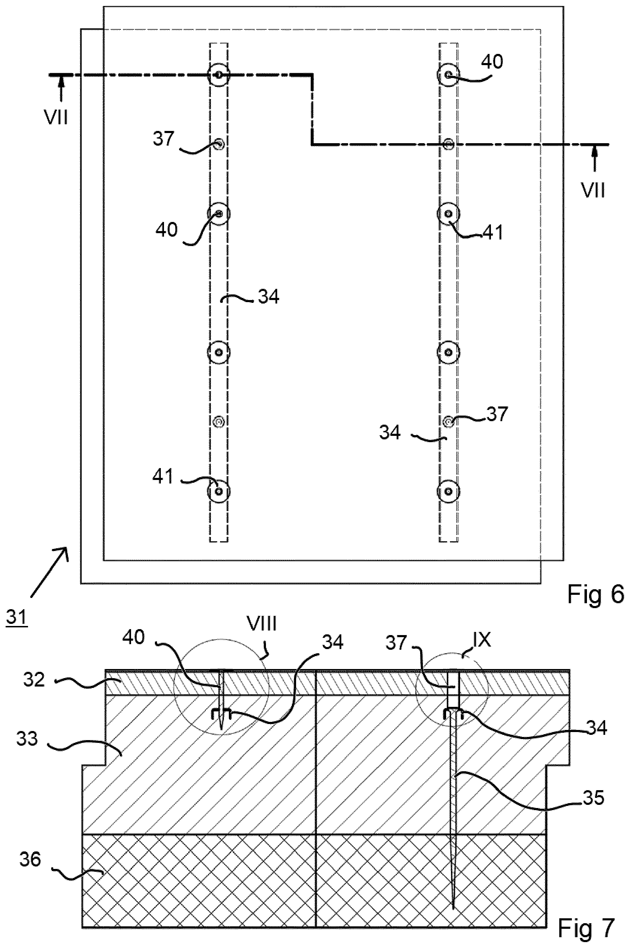

Figs. 6 to 9 relate to an insulation panel 31. Insulation panel 31 has a form comparable to insulation panel 11 and also has an upper layer 32 of white EPS and a lower layer 33 of grey EPS. Just under the upper layer 32, insulation panel 31 comprises two U-shaped coupling profiles 34 whose length is almost identical to the length of insulation panel 31 and which are positioned at about 25% and 75% of the width of insulation panel 31. The coupling profiles 34 may, during foaming of the insulation panel 31 in a mould, be positioned within the mould so that after foaming, and thus after insulation panel 34 has acquired its shape, the coupling profiles 34 are incorporated in the insulation panel.

The body of the U-shape of each coupling profile 34 extends parallel to the layers 32, 33. The legs of the U-shape give the body extra (bending) stiffness. Directly above each coupling profile 34, openings 37 are provided in two positions, which extend from the top of the insulation panel 31 to the coupling profile 34. These openings 37 may be formed in the mould in which the insulation panel 31 is formed, by means of pin-shaped mould parts that project from the mould wall into the mould cavity. For purposes of release, it is moreover advantageous if these pin-shaped mould parts are slidable to and fro in their longitudinal direction relative to said mould wall.

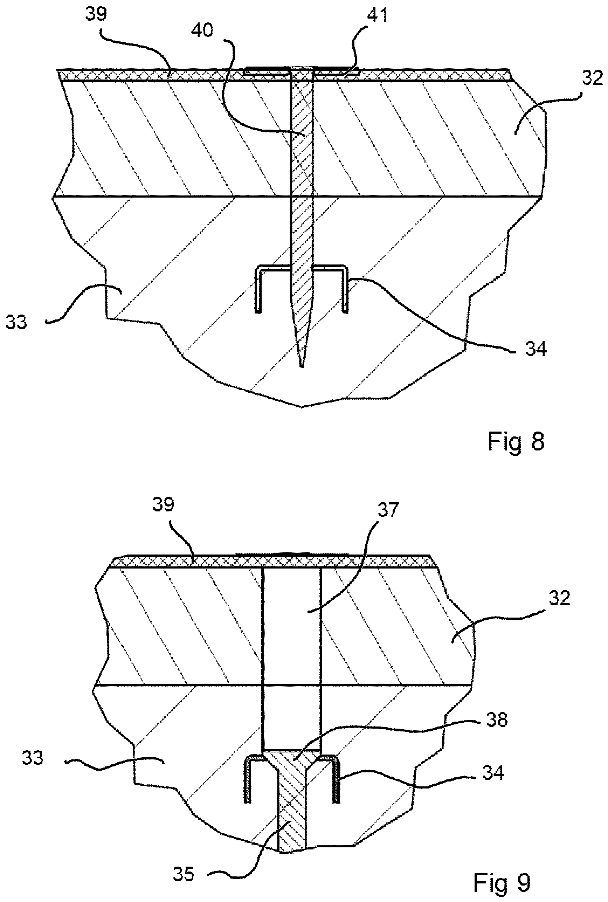

In applied form, in the selected embodiment example, each insulation panel is fastened with four long screws 35 via the openings 37 to the structure of the flat roof 36. During this screwing, the screws 35 tap a passage in the body of a coupling profile 34. The head 38 (Fig. 9) of the screws 35 rests against the top of said body. The lower end of the long screws 35 taps an opening in the roof structure 36 and engages with it.

After application of the long screws 35, a covering layer 39, comparable to covering layer 19, is applied on the insulation panels 31 that have been pushed against each other, for example by rolling it out onto them. Per coupling profile 34, then four short self-tapping screws are screwed at equal distances apart via plain washers 41 through the covering layer 39 into the insulation panel 31 and into the body of the coupling profile 34. The middle two short screws 40 are positioned between the two long screws 35 that are screwed into said coupling profile 34.

## Claims

1. Insulation panel for insulating a structure of a flat roof of a building, said insulation panel comprising a first layer of a first material and a second layer of a second material, bonded to the first layer, wherein the first material is expanded polystyrene with a thermal conductivity greater than 0.032 W/m·K and wherein the second material is expanded polystyrene with a thermal conductivity less than or equal to 0.032 W/m·K, wherein the thickness of the first layer is at least 10 mm and is less than the thickness of the second layer, and wherein the compressive strength of the first material is at least 10 kPa greater than the compressive strength of the second material and is greater than or equal to 60 kPa.

2. Insulation panel according to Claim 1, wherein the expanded polystyrene of the first layer is of the white type and the expanded polystyrene of the second layer is of the grey type.

3. Insulation panel according to Claim 1 or 2, wherein the compressive strength of the first material is at least 70 kPa and/or wherein the compressive strength of the first material is at least 20 kPa greater than the compressive strength of the second material and/or wherein the compressive strength of the first material is at least 1.2 times as great as the compressive strength of the second material.

4. Insulation panel according to one of the preceding claims, wherein the thickness of the first layer is less than 15 mm and the compressive strength of the first material is at least 200 kPa and/or wherein the thickness of the first layer is less than 20 mm and the compressive strength of the first material is at least 150 kPa and/or wherein the thickness of the first layer is less than 25 mm and the compressive strength of the first material is at least 120 kPa and/or wherein the thickness of the first layer is less than 30 mm and the compressive strength of the first material is at least 100 kPa.

5. Insulation panel according to one of the preceding claims, wherein the thickness of the second layer is at least twice as great as the thickness of the first layer.

6. Insulation panel according to one of the preceding claims, wherein at least one coupling body, which is preferably made of metal, with a coupling surface, is provided in the material of the insulation panel, said coupling surface extending parallel to the first layer and/or the second layer.

7. Insulation panel according to Claim 6, wherein the insulation panel comprises a number of coupling bodies, wherein each of at least some of the coupling bodies, at least in a perpendicular view on the coupling surfaces thereof, fits within a circle with a diameter of 20 cm.

8. Insulation panel according to Claim 6, wherein the at least one coupling body has an oblong shape with a length of at least 50 cm.

9. Insulation panel according to one of Claims 6 to 8, wherein the insulation panel comprises a number of coupling bodies, which are provided in a regular pattern.

10. Method for insulating a structure of a flat roof of a building comprising the steps of

a covering the structure of the flat roof with an insulating covering of insulation panels positioned against each other according to one of the preceding claims, wherein the first layer extends above the second layer,
b after step a, covering the insulating covering with a strip-shaped or cloth-shaped covering layer,
c fastening the covering layer and the insulating covering to the structure of the flat roof.

11. Method according to Claim 10, comprising the steps of

d after step a, fastening the insulating covering to the structure of the flat roof by moving pin-shaped fastening devices whose length is greater than the thickness of the insulating covering from the top of the insulating covering through the insulating covering so that the upper ends of the pin-shaped fastening devices extend above the insulating covering and the lower ends of the pin-shaped fastening devices extend with a clamping action into the structure of the flat roof,

e after step b, fastening the covering layer to the insulating covering by moving further pin-shaped fastening devices whose length is shorter than the thickness of the insulating covering from the top of the covering layer through the covering layer into the insulating covering so that the upper ends of the further pin-shaped fastening devices extend above the covering layer and the lower ends of the further pin-shaped fastening devices extend into the insulating covering.

12. Method according to Claim 11, wherein step d is carried out prior to step b.

13. Method according to Claim 11 or 12, wherein during step a, insulation panels according to one of Claims 6 to 9 are applied and the further pin-shaped fastening devices are moved during step e through the coupling bodies and after step e engage therewith.

14. Method according to Claims 11, 12 or 13, wherein the pin-shaped fastening devices are moved during step d through the coupling bodies and after step d engage therewith.

15. Method according to Claims 11, 12, 13 or 14, wherein the positions of the coupling bodies are determined by means of a sensor for the purpose of carrying out steps d and/or e in the correct position.

Fig 1

Fig 4

Fig 5

Fig 2

Fig 3

Fig 6

31

Fig 7

Fig 8

Fig 9

Europäisches
Patentamt

European
Patent Office

Office européen
des brevets

# EUROPEAN SEARCH REPORT

Application Number

EP 19 17 9584

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/056387 A1 (KNAUF DAEMMSTOFFE GMBH [DE]; ZIMPFER HARALD [DE] ET AL.) 1 June 2006 (2006-06-01) | 2-6 | INV. E04D3/35 E04D13/12 |
| Y | * figure 1 * * third paragraph; page 5 * * page 8 * | 1,7-15 | B32B27/06 B32B5/32 E04C2/20 E04C2/24 E04D13/16 |
| Y | DE 20 2015 005171 U1 (EJOT BAUBEFESTIGUNGEN GMBH [DE]) 26 August 2015 (2015-08-26) * paragraphs [0018] - [0020], [0085], [0096], [0097], [0101], [0195] * * figures * | 1,7-15 | |
| Y | WO 2012/058177 A1 (DOW GLOBAL TECHNOLOGIES LLC [US] ET AL.) 3 May 2012 (2012-05-03) * the whole document * | 1,7-15 | |
| Y | WO 2014/090707 A1 (KNAUF INSULATION [BE]) 19 June 2014 (2014-06-19) * the whole document * | 1,7-15 | TECHNICAL FIELDS SEARCHED (IPC) |
| A | EP 2 557 247 A1 (FLATZ VERPACKUNGEN STYROPOR GMBH [AT]) 13 February 2013 (2013-02-13) * the whole document * | 1 | E04D B32B E04C E04B |
| A,D | CH 706 454 A2 (SWISSPOR MAN AG [CH]) 31 October 2013 (2013-10-31) * the whole document * | 1 | |

The present search report has been drawn up for all claims

| Place of search | Date of completion of the search | Examiner |
|---|---|---|
| The Hague | 25 October 2019 | Tran, Kim Lien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 17 9584

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2019

| Patent document cited in search report | | Publication date | Patent family member(s) | | Publication date |
|---|---|---|---|---|---|
| WO 2006056387 | A1 | 01-06-2006 | AT 495321 | T | 15-01-2011 |
| | | | DE 202005022093 | U1 | 16-07-2013 |
| | | | DK 1815077 | T3 | 04-04-2011 |
| | | | EP 1815077 | A1 | 08-08-2007 |
| | | | EP 2284324 | A1 | 16-02-2011 |
| | | | ES 2358337 | T3 | 09-05-2011 |
| | | | HR P20110154 | T1 | 30-04-2011 |
| | | | PT 1815077 | E | 16-03-2011 |
| | | | SI 1815077 | T1 | 31-05-2011 |
| | | | WO 2006056387 | A1 | 01-06-2006 |
| DE 202015005171 | U1 | 26-08-2015 | DE 202015005171 | U1 | 26-08-2015 |
| | | | EP 3314064 | A1 | 02-05-2018 |
| | | | WO 2016206817 | A1 | 29-12-2016 |
| WO 2012058177 | A1 | 03-05-2012 | NONE | | |
| WO 2014090707 | A1 | 19-06-2014 | EP 2928683 | A1 | 14-10-2015 |
| | | | WO 2014090707 | A1 | 19-06-2014 |
| EP 2557247 | A1 | 13-02-2013 | NONE | | |
| CH 706454 | A2 | 31-10-2013 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CH 706454 A2